# EUROPÄISCHE PATENTSCHRIFT

(11) **EP 1 110 074 B1**
(45) Veröffentlichungstag und Bekanntmachung des Hinweises auf die Patenterteilung: **26.10.2005**
(21) Anmeldenummer: 99952437.4
(22) Anmeldetag: 18.08.1999
(51) Int. Cl.: G01N 21/00

(54) **THERMOWELLEN-MESSVERFAHREN**
THERMAL-WAVE MEASURING METHOD
PROCEDE DE MESURE PAR ONDES THERMIQUES

(30) Priorität: 20.08.1998 DE 19837889
(43) Veröffentlichungstag der Anmeldung: 27.06.2001
(73) Patentinhaber: SIEMENS AKTIENGESELLSCHAFT, 80333 München (DE)
(72) Erfinder: BAUMANN, Joachim, D-81925 München (DE); MANGOLD, Thomas, D-81547 München (DE)
(86) Internationale Anmeldenummer: PCT/DE1999/002590
(87) Internationale Veröffentlichungsnummer: WO 2000/011450

(56) Entgegenhaltungen:
- EP-A- 0 735 378
- DE-A- 4 203 272
- DE-A- 19 646 947
- US-A- 4 513 384
- US-A- 4 875 175
- US-A- 5 206 710
- WAGNER M ET AL: "ZERSTORUNGSFREIES MESSEN UND PRUFEN MIT OPTISCH ANGEREGTEN THERMISCHEN WELLEN NONDESTRUCTIVE MEASURING AND TESTING WITH OPTICALLY EXCITED THERMAL WAVES" LASER UND OPTOELEKTRONIK,DE,FACHVERLAG GMBH. STUTTGART, Bd. 26, Nr. 1, 1. Februar 1994 (1994-02-01), Seiten 63-70, XP000425829 ISSN: 0722-9003
- WAGNER M ET AL: "SINGLE-BEAM THERMOWAVE ANALYSIS OF ION IMPLANTED AND LASER ANNEALED SEMICONDUCTORS" MEASUREMENT SCIENCE AND TECHNOLOGY,GB,IOP PUBLISHING, BRISTOL, Bd. 2, Nr. 11, 1. November 1991 (1991-11-01), Seiten 1088-1093, XP000266522 ISSN: 0957-0233

## Beschreibung

Die Erfindung betrifft eine schnelle berührungslose, geometrische sowie thermische Charakterisierung eines planaren Mehrschichtaufbaues. Diesbezügliche Messungen sind beispielsweise bei Auto-Mehrschichtlackierungen gefragt. Die Kategorie von Thermowellen-Meßverfahren sind beispielsweise unter den Bezeichnungen Wärmewellen, photothermische und photoakustische Verfahren oder Lock-In-Thermographie, bekannt.

Zum Stand der Technik gehören Verfahren, die beispielsweise unter der Bezeichnung "photothermische Meßverfahren, Thermowellen-Meßverfahren oder Lock-In-Thermographie" laufen. Darin wird ein zu prüfendes Material mit einem oberflächlichen Schichtaufbau durch eine Heizquelle periodisch und bereichsweise aufgeheizt. Die Heizung muß modulierbar sein, so daß eine Amplitudenmodulation vorliegt. Damit können die Modulationsfrequenzen der Heizung sequentiell durchgestimmt werden, und das photothermische Signal, das von einer Probe herrührt, wird nach Amplitude und insbesondere seiner Phase als Funktion der Frequenz gemessen.Dabei kann die Auswertung hinsichtlich zweier oder mehrerer Unbekannter (z.B. Schichtdicken) im allgemeinen nicht in geschlossener analytischer Form durchgeführt werden, da hier ein "inverses Problem" vorliegt. Dies ist gleichbedeutend damit, daß die Auflösung des Gleichungssystems nach einer Unbekannten nicht ohne weiteres möglich ist.

Nachteile der zum Stand der Technik gehörenden Verfahren bestehen beispielsweise darin, daß die sequentielle Durchstimmung der Modulationsfrequenz der modulierbaren Wärmequelle sehr lange dauert.

In dem Artikel "Laser- und Optoelektronik, DE Fachverlag GmbH, Stuttgart (01-02-1994), 26 (1), 63-70" werden zerstörungsfreie Mess- und Prüfverfahren mit optisch angeregten thermischen Wellen beschrieben. Es werden maximal zwei unterschiedliche Frequenzen eingangsseitig aufmoduliert. Für die empfangsseitige Aufnahme von Material abgestrahlter Informationen werden unterschiedliche Messverfahren aufgelistet und es wird insbesondere das Verfahren zur Variation optischer Eigenschaften näher erläutert. Sowohl in diesem Artikel als auch in der Patentschrift US 5 206 710 wird keine emittierte Infrarot-Strahlung als Messgröße verwendet, sondern lediglich die Fotoreflexion ausgenutzt.

Die US-Patentschrift US 4 875 175 offenbart ein Verfahren und eine Vorrichtung zur Analyse und zur Messung von radiometrischen physikalischen Parametern zur Schichtdicken-Messung. Offenbart wird der Einsatz von zwei unterschiedlichen Frequenzen, die eingangsseitig simultan moduliert werden. Diese beiden genannten Frequenzen müssen besonderen Anforderungen entsprechen. Damit ist der auswertbare Objektbereich im Wesentlichen eingeschränkt auf ein Substrat mit genau einer Schicht, da lediglich zwei Anregungsfrequenzen beschrieben werden. Darüber hinaus ist das Verfahren eingegrenzt auf Frequenzen, die den beschriebenen Anforderungen genügen.

Der Erfindung liegt die Aufgabe zugrunde, ein Thermowellen-Messverfahren bereitzustellen, mit dem eine wesentliche Beschleunigung einer entsprechenden Messung und Auswertung erzielbar ist. Ein wesentliches Ziel besteht im Einsatz eines schnellen Thermowellen-Meßverfahrens zur Kontrolle von Schichtaufbauten in der laufenden Produktion.

Die Lösung dieser Aufgabe geschieht durch die Merkmalkombination des Anspruches 1.

Der Erfindung liegt die Erkenntnis zugrunde, daß die für die bereichsweise Aufheizung eines Schichtaufbaues verwendete Wärmequelle gleichzeitig mit mehreren unterschiedlichen Frequenzen ansteuerbar ist, und die emittierte Infrarotstrahlung korrespondierend zu den Ansteuerfrequenzen simultan auswertbar ist. Somit können bestimmte Stützpunkte aus einer Kennlinie zur sequentiellen Durchstimmung der Wärmequelle über die Frequenz festgelegt werden, woraus sich eine bestimmte Anzahl von unterschiedlichen diskreten Frequenzen ergibt. Diese werden gleichzeitig zur Ansteuerung der Wärmequelle verwendet, so daß die eigentliche Durchstimmung der Wärmequelle über die Frequenz nicht mehr durchgeführt wird, woraus sich eine wesentliche Zeiteinsparung ergibt.

Weitere Ausgestaltungen sind den Unteransprüchen zu entnehmen.

Als Wärmequelle können insbesondere eine Licht emittierende Diode (LED) oder eine Laserdiode vorteilhaft eingesetzt werden, da sie elektrisch amplituden-modulierbar sind. Grundsätzlich können sämtliche Heizquellen eingesetzt werden, die die Möglichkeit einer elektrischen Modulation bieten, so daß eine Mehrfrequenzanregung durchführbar ist.

Liegt eine bestimmte Schichtenfolge an der Oberfläche einer Probe vor, so kann in vorteilhafter Weise eine objektbezogene Einstellung der Ansteuerfrequenzen bei der Wärmequelle vorgenommen werden. Es gilt der Zusammenhang, daß mit sinkender Modulationsfrequenz an der Wärmequelle eine steigende Eindringtiefe in den Schichtaufbau einhergeht. Die Auswahl der Ansteuerfrequenzen entsprechend einem bekannten Schichtaufbau kann vorteilhaft eingestellt werden.

Mit dem Ansatz einer Regressionsanalyse mit nicht linearen Ansatzfunktionen bzw. mit einem lernfähigen neuronalen Netzwerk können die Zielgrößen, beispielsweise einzelne Schichtdicken, numerisch ermittelt werden. Dabei können experimentelle oder theoretisch/analytische Stützwerte als Kalibrierwerte verwendet werden.

Weitere vorteilhafte Ausgestaltungen können den Unteransprüchen entnommen werden.

Im folgenden werden anhand von schematischen Figuren weitere Ausführungsbeispiele beschrieben.
- Figur 1: zeigt einen Versuchsaufbau zur Durchführung eines Verfahrens entsprechend der Erfindung,
- Figur 2: zeigt in Abhängigkeit von der Ansteuerfrequenz einer Wärmequelle die Phasenverschiebung von zurückgestrahlten Wärmewellen,
- Figur 3: zeigt Referenz- und Detektorsignal bei einer Modulation von 10 Hz für zwei Frequenzgeber (Chopper),
- Figur 4: zeigt Referenz- und Phasensignal bei einer Modulation von 10 Hz für beide Chopper 1, 2,
- Figur 5: zeigt Referenz- und Detektorsignal bei einer Modulation von 40 und 20 Hz,
- Figur 6: zeigt Referenz- und Phasensignal bei einer Modulation von 40 und 20 Hz.

Durch die simultane Mehrfrequenzanregung und gleichzeitige Parallelauswertung hinsichtlich der verschiedenen Frequenzen bzw. der unterschiedlichen zurückgestrahlten korrespondierenden Infrarotstrahlung wird die Meßzeit drastisch verkürzt. Dabei kann durch geeignete Wahl der Einzelfrequenzanteile der Frequenzmeßbereich, in dem die Wärequelle angesteuert wird, genau dem Meßproblem angepaßt werden. Die gleichzeitige Intensitätsmodulation mit zwei oder mehreren Einzelfrequenzen auf eine elektrisch modulierbare Wärmequelle ermöglicht die parallele Auswertung in einer entsprechenden Anzahl von Lock-In-Verstärkern. Stattdessen kann auch die Signalauswertung mit einer FFT oder ähnlichen digitalen Auswerteverfahren, wie Korrelation oder Anfitten einer Sinus-Funktion, unter Einsatz eines digitalen Oszilloskopes, erfolgen.

Als Wärmequelle wird in der Regel eine Heizlichtquelle verwendet, wie beispielsweise eine Laserdiode oder ein LED. Zur Auswertung nach einer entsprechenden Anzahl von Lock-In-Verstärkern oder einer Fast-Fourier-Transformation können entweder die Regressionsanalyse oder ein neuronales Netzwerk eingesetzt werden.

Das wesentliche Merkmal der Erfindung besteht in der Gleichzeitigkeit, mit der eine Wärmequelle mit unterschiedlichen Frequenzen angesteuert wird. Sind beispielsweise drei Frequenzen ausgewählt worden, so liefert deren Summe ein Analogsignal, mit dem die Wärmequelle moduliert wird. Auf der Auswerteseite wird für jede Frequenz entsprechend ausgewertet. Dies geschieht gleichzeitig.

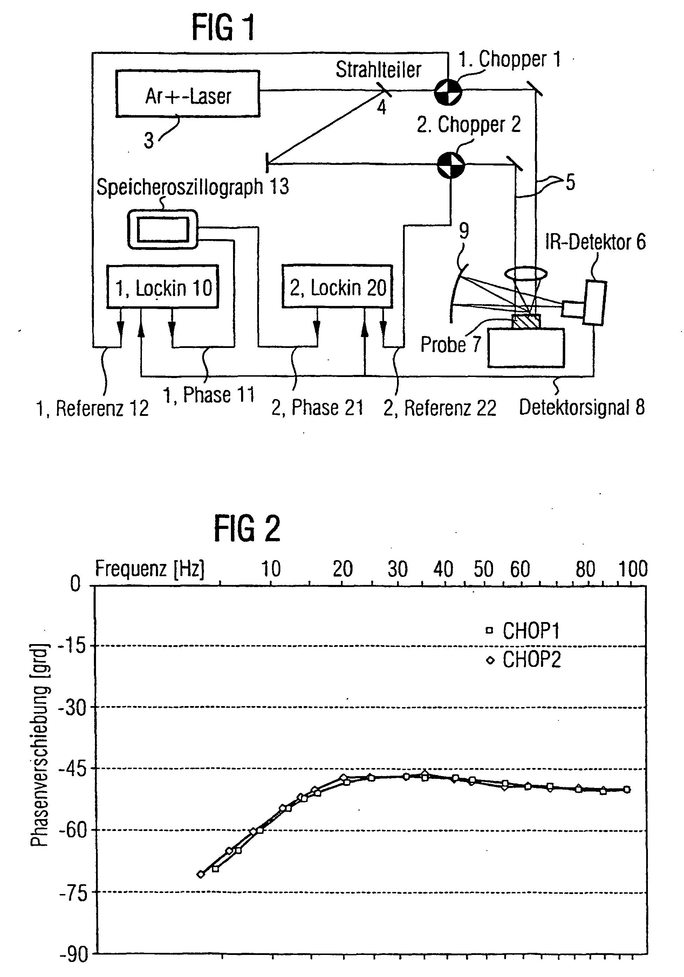

In einem Versuchsaufbau entsprechend Figur 1 wird eine Standardprobe 7, die aus einer TiN-Schicht auf einem Glasplättchen besteht, vermessen. Dabei heizt ein von einem Laser 3 abgegebener Heizstrahl die Probe bereichsweise auf. Der Heizstrahl wird nach dem Austritt aus dem Laser geteilt, wobei jeder der beiden Strahlen einem mechanischen Chopper 1, 2 zugeführt wird. Beim Durchlaufen der Chopper 1, 2 werden beide Strahlen mit unterschiedlichen Modulationsfrequenzen f1, f2 moduliert und anschließend gemeinsam fokussiert und auf die Probe 7 gerichtet. Dadurch ist es auch mit mechanischer Modulierung möglich, die Probe simultan mit zwei Modulationsfrequenzen anzuregen. Eine elektronische Bereitstellung der verschiedenen Frequenzen ist vorteilhaft. Nachdem das Detektorsignal 8 auf zwei verschiedene Lock-In-Verstärker 10, 20 gegeben ist, erhält man als Ergebnis entsprechend zwei Phasen 11, 21, die auf einem Speicheroszillographen 13 darstellbar sind. Der jeweilige Referenzeingang 12, 21 der Lock-In-Verstärker 10, 20 ist mit der Modulationsfrequenz der Chopper 1 bzw. 2 belegt. Um die beiden Strahlengänge aufeinander abzustimmen, wird zunächst eine Phase-Freqenz-Kurve aufgenommen, d.h. die Frequenz von beiden Choppern 1, 2 wird simultan durchgestimmt. Das Ergebnis ist in Figur 2 dargestellt. In Figur 2 ist zu erkennen, daß sich mit höheren Frequenzen von mehr als ca. 20 Hz die Frequenzverschiebung bei ungefähr -45° einstellt. Dies gilt gleichermaßen für Chopper 1 und für Chopper 2.

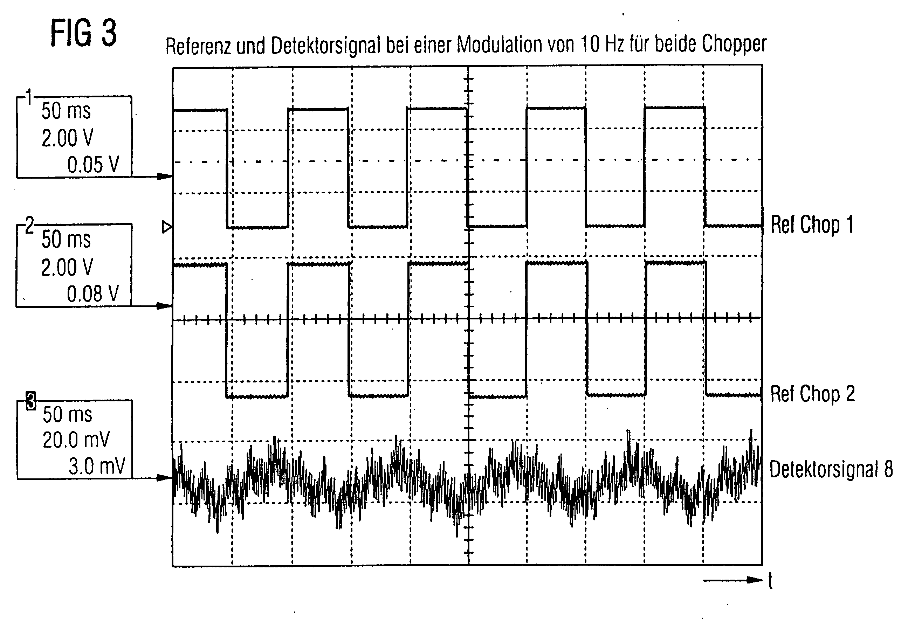

In Figur 3 werden die Ergebnisse dargestellt, wenn beide Chopper 1, 2 auf 10 Hz fest eingestellt sind und das Detektorsignal 8 gemessen wird. In den Darstellungen der Figuren 3-6 ist jeweils links neben jedem Signalverlauf ein Rahmen mit drei Angaben dargestellt. Darin bedeuten die ersten zwei Angaben die Skalierung auf den Achsen des Speichersoszillographen. Der erste Wert sagt aus, wieviele Millisekunden zwischen zwei Markierungen in einem Kästchen auf der Abszisse, auf der die Zeit angetragen ist, bedeuten. Der zweite Wert sagt aus, wieviel Volt auf der Ordinate, auf der die Spannung angetragen ist, der Abstand zwischen zwei Markierungen bzw. in einem Kästchen ausmacht. Der dritte Wert stellt das eigentliche Ergebnis dar, nämlich eine bestimmte Spannung, die in Volt oder in Millivolt gezählt, umgerechnet werden kann, beispielsweise für ein Amplituden- oder ein Phasensignal.

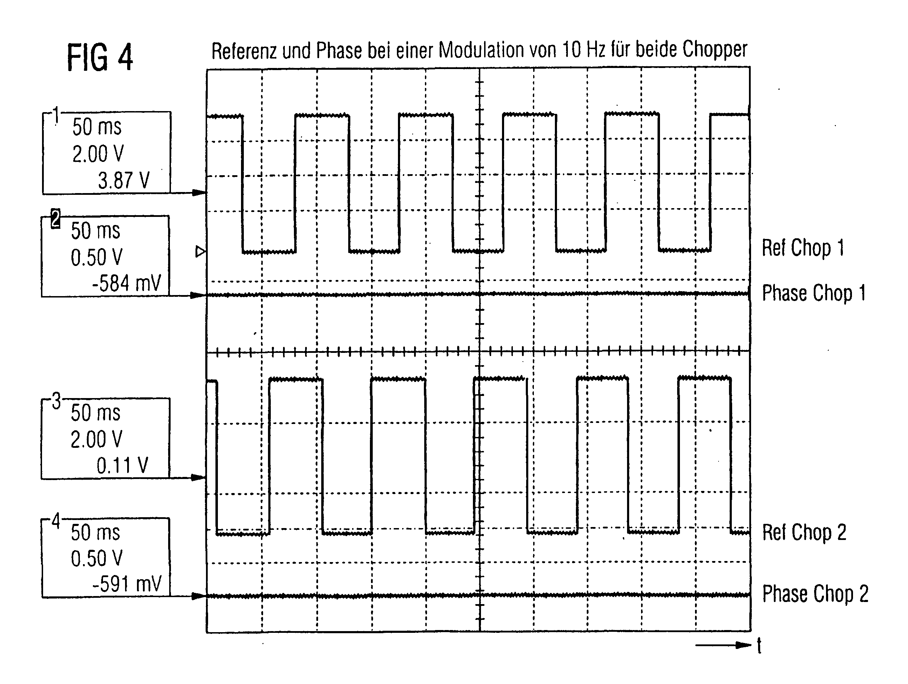

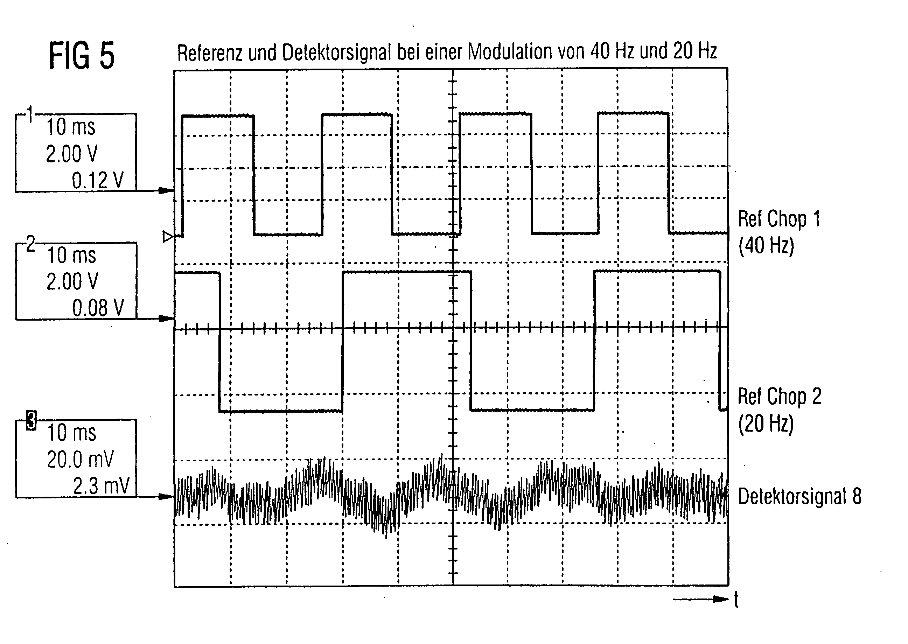

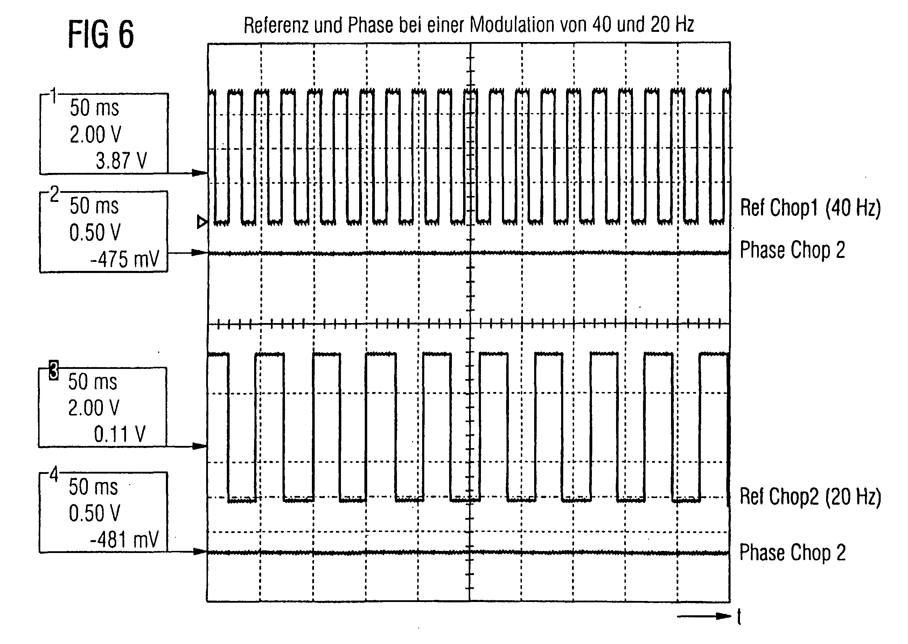

In den Figuren 3 und 4 sind jeweils Meßwerte für Referenz, Phasen- und Detektorsignal bei einer Modulation beider Chopper 1, 2 von 10 Hz dargestellt. In den Figuren 5 und 6 werden gleiche Darstellungen wie in den Figuren 3 und 4 verwendet, wobei jedoch die Modulation des ersten Choppers 1 40 Hz und die des zweiten Choppers 2 20 Hz beträgt.

Die Grundlage der dargestellten Meßwerte und Ergebnisse nach Figur 3 beinhalten, daß beide Chopper auf 10 Hz fest eingestellt sind und daß das Detektorsignal 8 gemessen wird. Die obere rechteckige Kurve stellt den Verlauf der Impulsfolge am Chopper 1 dar. Eine vollständige Schwingung benötigt dabei die Länge von zwei Kästchen bzw. zweimal 50 ms, so daß hier eine Frequenz von 10 Hz vorliegt. Gleiches gilt für die mittlere Kurve, die am zweiten Chopper 2 vorliegt. Die unterste Kurve stellt das Detektorsignal 8 dar, welches zunächst ein analoges Signal ist. In allen drei Fällen ist die Amplitude des Signales jeweils als dritter Wert im nebenstehenden Rahmen eingetragen, wobei dies jedoch wählbare Versuchsparameter sind.

Figur 2 zeigt sowohl die Referenz als auch die Phase bei einer Modulation von 10 Hz für beide Chopper 1, 2. Die Impulsfrequenz ist identisch mit der Frequenz in Figur 4. Die Phasenlage der Chopper 1, 2 ist nahezu identisch mit -584 mV und -591 mV, was umgerechnet ungefähr einer Phasenverschiebung von 60° entspricht. Dabei ist zugrundegelegt, daß 10 mV stellvertretend für 1° Phasenverschiebung steht. Anders ausgedrückt, weist die von der Probe 7 zurückgestrahlte Infrarotwelle bzw. Wärmewelle eine Phasenlage auf, die um 60° der Phase des Lasersignales hinterherhinkt.

In den Figuren 5 und 6 werden den Figuren 3 und 4 entsprechende Signale dargestellt. Dieses Mal sind jedoch die ersten und zweiten Chopper 1, 2 auf unterschiedlichen Frequenzen moduliert. Der erste Chopper 1 weist jeweils eine Impulsfrequenz von 40 Hz und der zweite Chopper 2 eine Impulsfrequenz von 20 Hz auf. Das Detektorsignal 8 ist wiederum ein aus mehreren Signalen überlagertes Ergebnissignal, das über die im Verfahren angewendete Signalverarbeitung umgewandelt wird. Auch für den in den Figuren 5 und 6 dargestellten Fall ist entsprechend dem zweiten und vierten Signal in Figur 6 die Phasenlage für beide Ansteuerfrequenzen annähernd gleich.

Durch die Messungen kann also nachgewiesen werden, daß es möglich ist, die Phase auch dann korrekt zu erhalten, wenn die Probe simultan mit zwei unterschiedlichen Frequenzen moduliert wird, anstatt wie bisher die Modulationsfrequenz durchzustimmen (Chirp).

Die Messung mit den beschriebenen mechanischen Choppern stellt nur eine Ausführung dar, wobei die Modulation von Laserdioden bzw. von LEDs mit mehreren Frequenzen gleichzeitig geplant ist. Darüber hinaus kann die flächige Ausleuchtung der Probe 8 durch entsprechende Einrichtungen sowie die Bildaufnahme mittels einer Kamera-Anordnung optimiert werden. Dabei liegt nach wie vor das Prinzip zugrunde, daß durch simultane Mehrfrequenzanregung und durch gleichzeitige Parallelauswertung der verschiedenen Frequenzen die Meßzeit verkürzt wird.

Wird gefordert, die geometrischen und thermischen Parameter eines.Mehrschichtaufbaues gleichzeitig zu ermitteln, so kann dies unter Umständen mit herkömmlichen Rechenmethoden nicht möglich sein. Man kann eine analytische Formel für die Phase in Abhängigkeit von den thermischen und geometrischen Parametern, sowie von der Modulationsfrequenz angeben. Soll allerdings nach den den Mehrschichtaufbau charakterisierenden Größen aufgelöst werden, so ist dies analytisch nicht möglich. Dies bedeutet, daß ein "inverses Problem" vorliegt. Die Auswertung kann dann durch numerische Verfahren wie beispielsweise Regressionsanalyse oder mittels eines Neuronalen Netzes erfolgen, was eine Automatisierung der Bestimmung der Materialparameter darstellt und mit einer höheren Genauigkeit und mit einer Zeitersparnis verbunden ist. Außerdem eröffnet sich die Möglichkeit beliebige photothermisch vermessene Schichtaufbauten theoretisch zu beschreiben und deren thermische und geometrische Eigenschaften zu bestimmen.

## Patentansprüche

1. Thermowellen-Messverfahren zur berührungslosen Messung von geometrischen und/oder thermischen Merkmalen eines Schichtaufbaues einer Probe, wobei eine in ihrer Intensität modulierbare Wärmequelle mit unterschiedlichen Modulationsfrequenzen angesteuert und der Schichtaufbau entsprechend aufgeheizt wird, wobei eine Thermowelle in der Probe angeregt und eine von der Probe aufgrund des Schichtaufbaus intensitätsmodulierte Strahlung emittiert wird, die korrespondierend zu der Modulation der Wärmequelle detektiert und ausgewertet wird,
**dadurch gekennzeichnet, dass**
mindestens drei unterschiedliche Modulationsfrequenzen vorhanden sind, und die aufgrund des Schichtaufbaues emittierte Strahlung im infraroten Wellenlängenbereich ausgewertet wird, wobei die Auswertung der emittierten Strahlung hinsichtlich Amplitude und/oder Phase bei den jeweiligen Modulationsfrequenzen der Wärmequelle gleichzeitig durchgeführt wird.

2. Verfahren nach Anspruch 1, worin als Wärmequelle ein Laser, vorzugsweise eine Laserdiode, oder eine lichtemittierende Diode verwendet wird.

3. Verfahren nach Anspruch 1 oder 2, worin mittels einer Lock-In-Auswertung die jeweiligen Modulationsfrequenzen der Strahlung im infraroten Wellenlängenbereich ausgewertet werden.

4. Verfahren nach Anspruch 1 oder 2, worin für die Auswertung der Modulationsfrequenzen der Strahlung im infraroten Wellenlängenbereich eine Fast-Fourier-Transformation vorgesehen ist.

5. Verfahren nach Anspruch 3 oder 4, worin eine weiterführende Auswertung hinsichtlich der geometrischen und/oder thermischen Merkmale des Schichtaufbaues der Probe durch eine Regressionsanalyse oder mittels eines neuronalen Netzes geschieht.

6. Verfahren nach einem der vorhergehenden Ansprüche, worin sowohl durch mathematisch bestimmte, theoretische Werte, als auch durch experimentell abgestützte Daten auf einen bestimmten Schichtaufbau hinsichtlich der geometrischen und/oder thermischen Merkmale des Schichtaufbaues der Probe kalibriert wird.

7. Verwendung des Verfahrens nach einem der vorhergehenden Ansprüche zur Ermittlung geometrischer Merkmale bei bekannten thermischen Merkmalen oder thermischer Merkmale bei bekannten geometrischen Merkmalen des Schichtaufbaues.

## Claims

1. Thermal wave measuring method for contactless measurement of geometrical and/or thermal features of a layer structure of a specimen, with a heat source which can be modulated in its intensity being driven at different modulation frequencies and the layer structure being heated up correspondingly, with a thermal wave being excited in the specimen and radiation, intensity-modulated due to the layer structure, being emitted from the specimen and detected and evaluated corresponding to the modulation of the heat source,
**characterised in that**
at least three different modulation frequencies are present and the radiation emitted due to the layer structure is evaluated in the infrared wavelength range, with the evaluation of the emitted radiation in terms of amplitude and/or phase being performed simultaneously at the respective modulation frequencies of the heat source.

2. Method according to claim 1, wherein a laser, preferably a laser diode, or a light-emitting diode is used as the heat source.

3. Method according to claim 1 or 2, wherein the respective modulation frequencies of the radiation are evaluated in the infrared wavelength range by means of a lock-in evaluation.

4. Method according to claim 1 or 2, wherein a fast Fourier transformation is provided for the evaluation of the modulation frequencies of the radiation in the infrared wavelength range.

5. Method according to claim 3 or 4, wherein a more detailed evaluation in terms of the geometrical and/or thermal features of the layer structure of the specimen takes place based on a regression analysis or by means of a neural network.

6. Method according to one of the preceding claims, wherein calibration to a specific layer structure in terms of the geometrical and/or thermal features of the layer structure of the specimen takes place based both on mathematically determined theoretical values and on experimentally supported data.

7. Use of the method according to one of the preceding claims for determining geometric features with known thermal features or thermal features with known thermal features of the layer structure.

## Revendications

1. Procédé de mesure par ondes thermiques pour la mesure sans contact de caractéristiques géométriques et/ou thermiques d'une structure en couches d'un échantillon, dans lequel on commande une source de chaleur dont l'intensité est modulable à l'aide de fréquences de modulation différentes et on réchauffe la structure en couches de manière correspondante, une onde thermique étant alors excitée dans l'échantillon et un rayonnement modulé en intensité du fait de la structure en couches étant émis par l'échantillon, lequel rayonnement est détecté et évalué en correspondance avec la modulation de la source de chaleur,
**caractérisé en ce que**
au moins trois fréquences de modulation différentes sont présentes et **en ce que** le rayonnement émis du fait de la structure en couches est évalué dans la gamme des longueurs d'ondes infrarouges, l'évaluation du rayonnement émis, en ce qui concerne amplitude et/ou phase, étant effectuée simultanément pour les fréquences de modulation respectives.

2. Procédé selon la revendication 1, dans lequel on utilise comme source de chaleur un laser, de préférence une diode laser, ou une diode électroluminescente.

3. Procédé selon la revendication 1 ou 2, dans lequel on évalue les fréquences de modulation respectives du rayonnement dans la gamme des longueurs d'ondes infrarouges à l'aide d'une évaluation lock-in.

4. Procédé selon la revendication 1 ou 2, dans lequel une transformation de Fourier rapide est prévue pour l'évaluation des fréquences de modulation du rayonnement dans la gamme des longueurs d'ondes infrarouges.

5. Procédé selon la revendication 3 ou 4, dans lequel une évaluation plus poussée en ce qui concerne les caractéristiques géométriques et/ou thermiques de la structure en couches de l'échantillon est effectuée à l'aide d'une analyse par régression ou à l'aide d'un réseau neuronal.

6. Procédé selon l'une des revendications précédentes, dans lequel, aussi bien grâce à des valeurs théoriques déterminées mathématiquement que grâce à des données appuyées expérimentalement, on calibre sur une structure en couches déterminée en ce qui concerne les caractéristiques géométriques et/ou thermiques de la structure en couches de l'échantillon.

7. Utilisation du procédé selon l'une des revendications précédentes pour la détection de caractéristiques géométriques en présence de caractéristiques thermiques connues ou de caractéristiques thermiques en présence de caractéristiques géométriques connues de la structure en couches.
